# EUROPEAN PATENT SPECIFICATION

(11) **EP 4 363 430 B1**
(45) Date of publication and mention of the grant of the patent: **22.04.2026**
(21) Application number: 22738086.2
(22) Date of filing: 29.06.2022
(51) Int. Cl.: C07G 1/00, D21C 11/02, G06F 1/00

(54) **METHOD AND SYSTEM FOR PRODUCING LIGNIN**
VERFAHREN UND SYSTEM ZUR HERSTELLUNG VON LIGNIN
PROCÉDÉ ET SYSTÈME DE PRODUCTION DE LIGNINE

(30) Priority: 30.06.2021 SE 2150839
(43) Date of publication of application: 08.05.2024
(73) Proprietor: VALMET AB, 85 194 Sundsvall (SE)
(72) Inventor: WALLMO, Henrik, 44160 Alingsås (SE); LITTORIN, Anders, 42530 Hisings-Kärra (SE)
(74) Representative: Novagraaf Group
(86) International application number: PCT/SE2022/050650
(87) International publication number: WO 2023/277774

(56) References cited:
- WO-A1-2014/116150
- CN-A- 106 468 032
- US-A1- 2014 116 425
- US-A1- 2016 076 199

## Description

### FIELD OF INVENTION

The present invention relates to methods and systems for lignin separation from an aqueous slurry containing lignocellulosic biomass material, for example from black liquor, using precipitation processes. The present invention also relates to a computer structure for controlling the process.

### BACKGROUND OF THE INVENTION

An efficient process for lignin separation from black liquor is Lignoboost^{™}, in which the basic concept includes a two stage acidic wash process. The Lignoboost^{™} process produces a lignin product which if used as fuel is classified as a "green" fuel being based on recovered fuel. The idea with classification of "green" fuels is based upon the concept not to increase the carbon dioxide footprint, i.e. the emissions, by burning fossil fuels. The Lignoboost^{™} process have been described in several earlier patent applications, for example, WO 2006/031175, WO 2006/038863, and WO 2014/116150.

An important aspect of the process is that the required charge of chemicals for the acidification may be high. If this is the case, the cost of fresh chemicals is a large part of the operational costs and commercial viability of the process will thereby be lower. These problems could be reduced, if the process is optimized for minimum requirement of charges of fresh chemicals, making the lignin product commercially sound. Acidifiers in form of mill generated waste flows are thus preferable as it may solve waste disposal problems and lessen environmental impact. As the precipitation of lignin requires acidification of alkaline black liquor flows, much of the total amount of acidifier is used to decrease the pH level down to the point of where lignin starts to precipitate. This first phase reaching this pH level typically reduce the pH level from about pH 13 in the black liquor down to a pH of about 11.5, and normally do not involve any nucleation of lignin particles. The amount of acidifier needed is nevertheless relatively high for this first phase as the pH follows a logarithmic curve, and any following additional lowering a pH from 11.5 requires far less acidifier for the same order of lowered absolute pH value.

As the chemical constitution of the black liquor may change during operation, typically due to changes in the pulping process as of changes in wood material used or cooking conditions, the first precipitation process for precipitating lignin particles from the black liquor may need adaptation to the present conditions. As differing requirements apply for the first precipitation phase, where mainly lowering of pH is the objective, and the second precipitation phase, where lignin starts to precipitate it will be difficult to design a system that meets both these requirements.

In WO 2006/031175, lignin is precipitated from black liquor by lowering the pH using CO2. After the precipitated lignin has been separated from the black liquor it is fed to an acidification phase where it is re-slurried with water and sulfuric acid. This step is done at a temperature of about 50-70 degress Celsius. Further, the method described in WO 2006/031175 for separation of lignin from black liquor comprises the following steps: a) precipitation of lignin by acidifying black liquor and thereupon dewatering, b) suspending the lignin filter cake obtained in step a) whereupon a second lignin suspension is obtained and adjusting the pH level to approximately the pH level of the washing water of step d) below, c) dewatering of the second lignin suspension, d) addition of washing water and performing a displacement washing at more or less constant conditions without any dramatic gradients in the pH, and e) dewatering of the lignin cake produced in step d) into a high dryness and displacement of the remaining washing liquid in the filter cake, whereby a lignin product is obtained which has an even higher dryness after the displacement washing of step e). WO 2006/031175 describes the importance of keeping the re-slurry at the same pH and ionic strength as the later applied wash water. This is to control lignin stability and facilitate the filtration and washing procedure. It also describes the importance of minimizing filtration resistance to minimize filtration area as well as promote possibilities to reach a high dry solid content of the lignin production. However, there is still room for significant improvements of the process of lignin separation.

Documents WO2014/116150, US2016/076199 and CN106468032 each describe methods of separating lignin from black liquor, US2014/116425 from biomass.

### SUMMARY OF THE INVENTION

An object of the present invention is to provide improved methods and systems for lignin separation from an aqueous slurry containing lignocellulosic biomass material, for example from black liquor, using precipitation processes.

Another object of the present invention is to provide methods and systems for increased filtering capacity in lignin separation, preferably, from an aqueous slurry containing lignocellulosic biomass material such as black liquor.

The objects of the invention are achieved with a method, a system and a computer-readable medium as defined in independent claims 1, 7 and 12.

According to an aspect of the present invention, there is provided a method for separation of lignin from an aqueous slurry containing lignocellulosic biomass material, preferably black liquor, comprising the steps of:
- providing the aqueous slurry having an initial pH level to at least one precipitation phase for precipitating lignin;
- performing the at least one precipitation phase, wherein each precipitation phase is performed during a respective predetermined reaction time and includes adding at least one acidifier, so that a decrease in the pH value of the aqueous slurry to a lower pH level is created;
- separating the precipitated lignin in a first separation phase;
- performing an acidification phase including:
   - performing a re-slurry step including mixing lignin from the first separation phase with an acidifier to form an acidic slurry;
   - establishing a reaction temperature in a range of 65 - 95 degrees Celsius in the acidic slurry; and
   - performing a retention step including maintaining the acidic slurry at the reaction temperature for a reaction time period of 30 - 60 minutes; and
- separating the treated lignin content from the acidic slurry in a second separation phase.

Advantageously, the method comprises a washing step for washing the lignin after separation of the lignin in the second separation phase.

According to a further aspect of the present invention, there is provided a system for separation of lignin from from an aqueous slurry containing lignocellulosic biomass material, such as black liquor, comprising at least one precipitation vessel configured to carry out at least one precipitation phase, wherein each precipitation phase is performed during a respective predetermined reaction time and includes adding at least one acidifier, so that a decrease in the pH value of the aqueous slurry to a lower pH level is created.. Further, the system includes a first separation device configured to carry out a first separation phase comprising separating the precipitated lignin. The system also comprises a suspension vessel configured to carry out an acidification phase comprising performing a re-slurry step including mixing lignin from the first separation phase with an acidifier to form an acidic slurry, and at least one heat generating device configured to establish a reaction temperature in a range of 65 - 95 degrees Celsius of the acidic slurry. The suspension vessel or a separate retention vessel, which may be part of the system, is configured for carrying out a retention step comprising maintaining the acidic slurry at the reaction temperature for a reaction time period of between 30 - 60 minutes. The system further includes, downstream the acidification phase, a second separation device configured for carrying out a second separation phase comprising separating the treated lignin content from the acidic slurry.

According to another aspect of the present invention, there is provided a computer structure or computer-readable medium having stored therein computer-readable instructions for a processor, wherein the instructions when read and implemented by the processor, cause the processor to control at least one precipitation phase in an aqueous slurry containing lignocellulosic biomass material, preferably black liquor, wherein each precipitation phase is performed during a respective predetermined reaction time and includes adding at least one acidifier, so that a decrease in the pH value of the aqueous slurry to a lower pH level is created, to control a separation of precipitated lignin in a first separation phase, to control an acidification phase including performing a re-slurry step including mixing lignin from the first separation phase with an acidifier to form an acidic slurry, establishing a reaction temperature in a range of 65 - 95 degrees Celsius in the acidic slurry, and maintaining the acidic slurry at the reaction temperature for a reaction time period of 30 - 60 minutes, and to control separation of treated lignin content from the acidic slurry in a second separation phase. That is, the computer structure or computer-readable medium is configured to carry out the steps of the method according to the invention and/or to control the system according to the invention.

The present invention is hence based on the surprising insight that significantly improved efficiency and productivity in the filtering stage of a lignin separation process can be achieved by accurately control an elevation of the temperature during the acidification phase, suitably during or after the acid re-slurry step, and maintain the elevated temperature during a predetermined reaction time or retention time. Surprising results have been shown by using a reaction temperature of about 65 - 95 degrees Celsius, or around 85 degrees Celsius during a retention period or time of about 30 - 60 minutes. In fact, it has been discovered that an elevated or increased temperature, for example, of about 65 - 95 degrees Celsius, or around 85 degrees Celsius, entails a significant reduction in washing resistance and filtration resistance. As an example, performing the re-slurry step at a temperature of around 85 degrees Celsius resulted in a 2 to 2.5 times lower filtration resistance and in a 4 to 7.5 times lower washing resistance (in comparison with a reference case where a temperature of around 55 degrees Celsius).

The reaction time period is suitably 30-60 minutes, or in some embodiments 30-50 minutes.

According to embodiments of the present invention, the acidification phase may comprise lowering a pH value of the acidic slurry to a pH value between 1-4, in some embodiments between 1-3, 2-4 or 2-3.

According to embodiments of the present invention, a reaction temperature in a range of 70 - 90, or advantageously 70 - 88, degrees Celsius is established in the acidic slurry.

In embodiments of the present invention, the re-slurry step includes mixing lignin with an acidifier to form an acidic slurry, including heating the acidic slurry to the reaction temperature in a range of 65 - 95 degrees Celsius during the re-slurry step.

According to embodiments of the present invention, the re-slurry step includes mixing lignin from the first separation phase with an acidifier to form an acidic slurry, wherein the acidic slurry has a temperature in a range of 30 - 65 degrees Celsius. Further, the acidic slurry is fed to a heating step where the temperature of the acidic slurry is increased to the reaction temperature having a range of 65 - 95 degrees Celsius. The temperature of the acidic slurry is maintained at the reaction temperature for a reaction time period of 30 - 60 minutes.

In embodiments of the present invention, a cooling step is executed before the second separation phase, wherein the temperature of the acidic slurry is reduced with between 25 - 50 degrees Celsius, or 30 - 45 degrees Celsius. For example, from about 90 degrees Celsius to a temperature range between 40 - 65 degrees Celsius, or between 45 - 60 degrees Celsius.

Hence, in certain embodiments of the present invention, a cooling step may be configured to reduce a temperature of the acidic slurry from the reaction temperature with between 25 - 50 degrees Celsius, the cooling step being arranged up-stream the second separation phase. In embodiments of the present invention, the cooling step is performed using a heat exchanger.

In embodiments, the method comprises performing a first precipitation phase in a first precipitation vessel during a first time duration including adding a first acidifier, wherein a decrease in the pH value of the aqueous slurry from said initial pH level to a first pH level is created, wherein the first pH level is above 11, feeding processed aqueous slurry from the first precipitation phase (PP1) to a second precipitation phase (PP2), and performing the second precipitation phase (PP2) in a second precipitation vessel during a second time duration of at least 20 minutes, the second precipitation phase (PP2) including adding a second acidifier, wherein a decrease in the first pH value from said first pH level to a second pH level is created, wherein said second pH level is above 9, or between 9 - 11.

In further embodiments of the present invention, the first precipitation phase (PP1) is performed during a first time duration including adding a first acidifier, wherein a decrease in the pH value of the black liquor from said initial pH level to a first pH level is created, so that at least 5% of the original lignin content is precipitated as nucleus particles in a first precipitation phase, or at least 10% of the original lignin content is precipitated as nucleus particles in a first precipitation phase, or at least 15% of the original lignin content is precipitated as nucleus particles in a first precipitation phase, or at least 20% of the original lignin content is precipitated as nucleus particles in a first precipitation phase.

According to embodiments of the present invention, the at least one heat generating device is configured to heat liquid and to provide the heated liquid to the re-slurry step, wherein said suspension vessel is arranged to receive the heated liquid from said heat generating device to establish a reaction temperature in a range of 65 - 95 degrees Celsius, and wherein the suspension vessel is configured to perform the retention step and is configured to maintain the acidic slurry at the reaction temperature for a reaction time period of 30 - 60 minutes. Alternatively, the heated liquid can be heated during the re-slurry step and then provided to a retention vessel for performing the retention step. At least one cooling step may be arranged down-stream the re-slurry step and be configured to reduce a temperature of the acidic slurry from the reaction temperature with between 25 - 50 degrees Celsius.

In embodiments of the present invention, the suspension vessel is configured to mix lignin with an acidifier to form an acidic slurry and to provide the acidic slurry to the at least one heat generating device. The at least one heat generating device is configured to receive the acidic slurry and to establish a reaction temperature in a range of 65 - 95 degrees Celsius of the acidic slurry and to provide the heated acidic slurry to the retention step where the acidic slurry is maintained at the reaction temperature during the reaction time.

In embodiments of the present invention, the cooling step is configured to receive the acidic slurry from the retention step and to reduce a temperature of the acidic slurry from the reaction temperature with between 25 - 50 degrees Celsius, the cooling step being arranged up-stream the second separation phase.

The disclosure may be understood more readily by reference to the following detailed description of the various features of the disclosure and examples included therein.

### BRIEF DESCRIPTION OF THE DRAWINGS

Further objects and advantages of the invention will become apparent from the following description of an apparatus for carrying out the method of the invention shown by way of example in the accompanying figures which forms a part of this specification and in which:
FIG 1 schematically shows a basic and general lignin separation process in accordance with the present invention;
FIG 2 schematically shows a lignin separation process in accordance with embodiments of the present invention;
FIG 3 schematically shows a lignin separation process in accordance with a specific embodiment of the present invention;
FIG 4 schematically shows a lignin separation process in accordance with another specific embodiment of the present invention; and
Fig. 5 schematically a lignin separation process in accordance with embodiments of the present invention.

### BRIEF DESCRIPTION OF THE INVENTION

The present invention is generally based on the LignoBoost^{™} process, which is basically described in, for example, WO 2006/031175. In the basic concept, the separation of lignin from black liquor comprises the following in sequence:
- Precipitation of lignin by acidification of the black liquor by adding a first acid or mixture of acids, in any suitable precipitation reactor,
- Dewatering while forming a first filter cake with high content of lignin, which dewatering is made in any suitable filter press. A first filtrate is drain from the lignin suspension. In order to reduce the amount of liquid in the filter cake, a gas may be blown through the lignin cake in order to displace any residual black liquor;
- Suspending the first lignin cake in a second acidification phase using a second acid or mixture of acids, which suspension is made in any suitable suspension vessel, in order to obtain a second lignin suspension,
- Dewatering and washing to form a second filter-/lignin cake with high content of lignin. The dewatering is made in any suitable filter press, which may drain a second filtrate from the lignin suspension, and at least a portion of this second filtrate may be re-circulated back to the suspension stage. Washing of the second filter cake is made in any suitable wash apparatus, adding a wash liquid to the washing stage.

In order to obtain a purified lignin product having low residual levels of metal, especially sodium, while consuming less acidifiers and hence produce less volume of acidic waste flow, and at low costs for acidifiers, some process conditions have been found best suitable. It has been found that carbon dioxide is the preferred first acidifier as carbon dioxide may be found in waste gases in a pulp mill. Hence, using carbon dioxide in waste gases solves the waste gas problems and decreases the need to use external chemicals. The conditions in the precipitation stage are kept at an alkaline level. This results in that bulk volume of black liquor treated in the precipitation phase is kept in the filtrate and may thus be re-introduced in the recovery operations without inflicting any dramatic pH changes in the recovery process. The relatively small volume share of the lignin cake is the only volume needing further acidification for leaching of metals from the lignin, which means that the volumes of the second acidifier is low in relation to the black liquor volumes. In order to obtain sufficient leaching of metals the leaching process has been kept at operating conditions at pH 2-4 at 50-60 ⁰C. A lignin product could be produced at these conditions with very low residual content of sodium, thus suitable as fuel in for example combustion plants.

It is intended throughout the present description that the expressions "separation phase" and "separation device" embrace any means of separation. Preferably the separation is performed by using centrifugation, a filter press apparatus, a band filter, a rotary filter, such as a drum filter, or a sedimentation tank, or similar equipment. Most preferred a filter press apparatus is used.

It is intended throughout the present description that the expression "vessel", for example, "separation vessel" or "retention vessel", embrace any type of vessel or device suitable for the purpose. A vessel may, for example, be a tank or a conduit.

It is intended throughout the present description that the expression "black liquor" embraces spent cooking liquor from a digester, having most of the lignin from the cellulose material dissolved in the "black liquor". The black liquor may have a large content of organic and inorganic material. The black liquor may also have passed through separation processes for extracting turpentine and/or other specific constituents, while keeping the bulk volume of dissolved lignin unaltered.

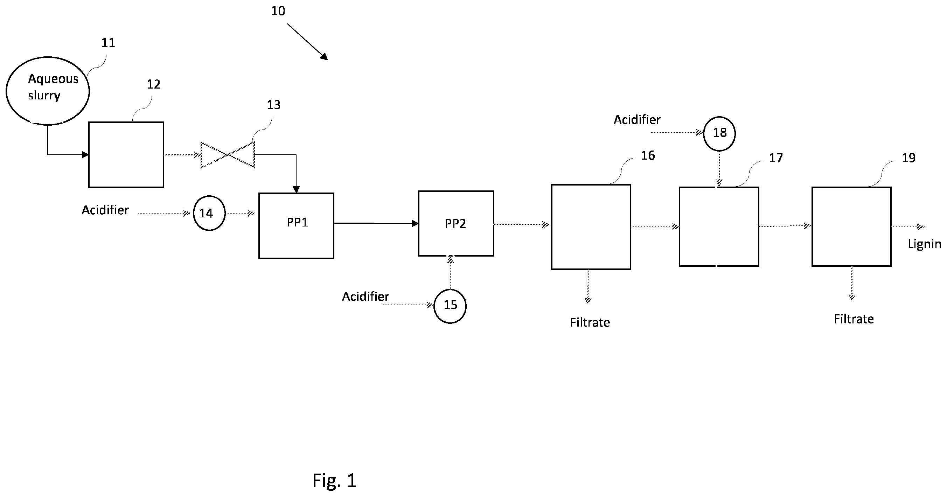

With reference first to Fig. 1, a general precipitation system 10 according to the present invention, and its process conditions will be described. The described system is adapted for using an aqueous slurry containing lignocellulosic biomass material such as black liquor from a kraft pulping process. In this system, two precipitation phases PP1 and PP2 are provided in series. In embodiments, for example, two precipitation vessels, for example, carbonizing towers, vessels, tanks, pipes, or conduits may be connected in series. However, one or more additional precipitation phases may be arranged up-stream the first precipitation phase and/or down-stream the second precipitation phase.

In a first general embodiment of the present invention, an aqueous slurry containing lignocellulosic biomass material, such as black liquor, having an initial pH level and an initial temperature, for example, between 40 - 85 degrees Celsius, is fed 11 to a black liquor tank 12, and thereafter further to a first precipitation phase, PP1, using, for example, pumps 13, and in embodiments via a heat exchanger (not shown). The first precipitation phase PP1 is preferably performed during a first reaction time including adding 14 a first acidifier. The first precipitation phase is preferably performed during a reaction time of at least 10 seconds, and preferably during 10 - 80 seconds, and preferably during 10 - 30 seconds.

In embodiments, the first acidifier is added using injection nozzles or valves 14 to achieve a high pressure in the first precipitation phase, for example, a pressure more than 5 bars. However, the first precipitation phase may be performed at atmospheric pressure or higher, for example, above 2, 3, 4 or 5 bars. A higher pressure facilitates precipitation. The first acidifier is preferably an acidifying gas such as CO₂. In the first precipitation phase, a decrease in the pH value of the aqueous slurry from the initial pH level to a first pH level is created and at least 10% of the original lignin content is precipitated as nucleus particles. For example, the initial pH-level of the aqueous slurry is around 13 or 13,5 and the pH is lowered to around 11 in the first precipitation phase.

Thereafter, the processed aqueous slurry is fed from the first precipitation phase PP1 to a second precipitation phase PP2, which is performed during a second predetermined time duration, or reaction time. In embodiments of the present invention, the processed black liquor is fed to a filter device such as a filtrate filter up-stream the second precipitation phase PP2. In embodiments of the present invention, the second precipitation phase is performed at a second pressure being lower than the pressure of the first precipitation phase. Alternatively, the second precipitation phase may be performed at the same pressure as in the first precipitation phase or at a higher pressure than in the first precipitation phase. For example, the second precipitation phase may be performed at atmospheric pressure or higher, for example, above 2, 3, 4 or 5 bars. A higher pressure facilitates precipitation. A second acidifier, preferably an acidifying gas such as CO₂, is continuously added using at least one injector 15, wherein a decrease in the first pH value from the first pH level to a second pH level is created. The second pH may be between 9 - 11. In preferred embodiments, the second acidifier is added during continuous stirring of the black liquor slurry.

In embodiments of the present invention, the second precipitation phase PP2 is performed during a reaction time of at least 20 minutes, and preferably during a reaction time of 20 - 60 minutes. The second precipitation phase PP2 may be performed at atmospheric pressure or higher. Thereafter, the processed aqueous slurry is fed to a separation or filtering phase 16, which may include a filter feed tank and a filter.

The separation phase 16 may include dewatering made in a filter, for example, a filter press, a centrifugal device, or a drum filter, which may drain a filtrate from the lignin suspension and a lignin cake may be produced having a pH level in the range from neutral to alkaline.

Thereafter, an acidification phase 17 is arranged where an acidifier is added 18, for example H₂SO₄, to thereby form an acidic slurry and establishing a low pH value, for example, in the range of 1 - 4, or in some embodiments 1 - 3. Preferably, a reaction temperature of the acidic slurry is established, for example, in the range of 65 - 95 degrees Celsius, or 70 - 85 degrees Celsius, or 75 - 88 degrees Celsius, or 78 - 85 degrees Celsius, or 83 - 87 degrees Celsius, or around 85 degrees Celsius, and the acidic slurry is maintained at the reaction temperature during a reaction time of between, for example, 30 - 60 minutes, or 35 - 55 minutes, or 35 - 45 minutes, or around 40 minutes. This is followed by a second separation phase 19 in a filter in which treated lignin content is separated from the acidic slurry. The second separation phase 19 may include a washing step wherein the lignin is washed.

Other acidifiers than H₂SO₄ may be used, but sulfuric acid is preferred as sulfur is a common chemical component in black liquor in kraft pulping. However, there may be a need for purging sulfur in order to keep the sodium/sulfur balance of the mill. Using HCI as an alternative acidifier is often not preferred as it will introduce chlorides into the chemical cycle of the mill.

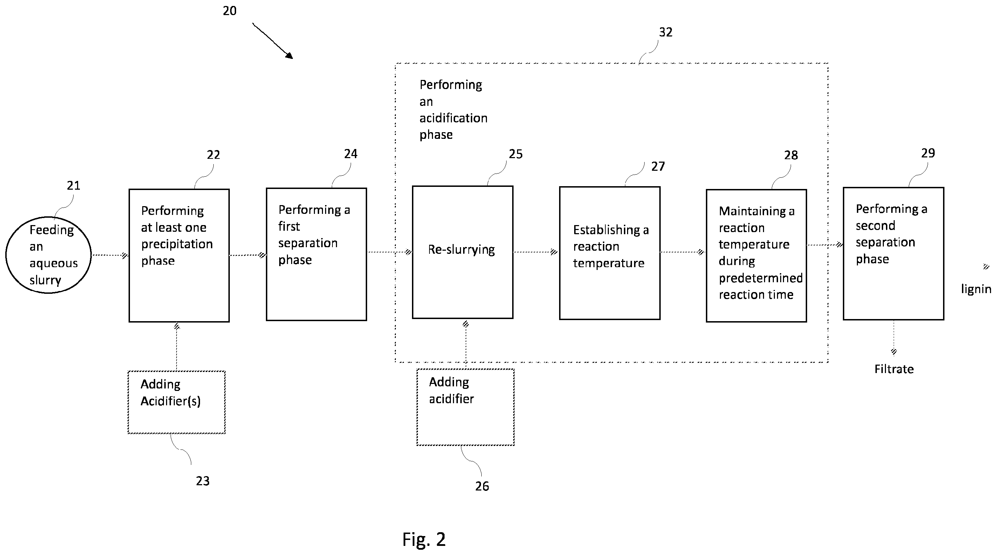

Turning now to Fig. 2, a flow chart illustrates the general and basic steps of a method 20 in accordance with the present invention. The method 20 is preferably executed in a system as described with reference to Fig. 1. First, an aqueous slurry containing lignocellulosic biomass material, preferably black liquor, having an initial pH level is fed 21 to at least one precipitation phase (PP1). At least one precipitation phase is performed 22 during predetermined reaction times including adding 23 acidifiers, wherein successive decreases in the pH value of the black liquor from the initial pH level to respective lower pH levels are created.

In embodiments of the present invention, at least 10% of the original lignin content is precipitated as nucleus particles in a first precipitation phase.

At step 24, a first separation phase of the precipitated lignin is performed, and a lignin is produced, for example, in form of a lignin cake. Thereafter, an acidification phase 32 is performed including: performing 25 a re-slurry step including mixing lignin with an acidifier 26 to form an acidic slurry, establishing 27 a reaction temperature in a range of 65 - 95 degrees Celsius in the acidic slurry, and maintaining 28 the acidic slurry at the reaction temperature for a reaction time period of 30 - 60 minutes. Thereafter, in a second separation phase 29, the treated lignin content is separated from the acidic slurry in a second separation phase. A cooling step may be introduced between step 28 and step 29, where the acidic slurry is cooled to a temperature below 70 degrees Celsius, or in examples to a temperature between 30 - 65 degrees Celsius, or 35 - 60 degrees Celsius, or 40 - 55 degrees Celsius.

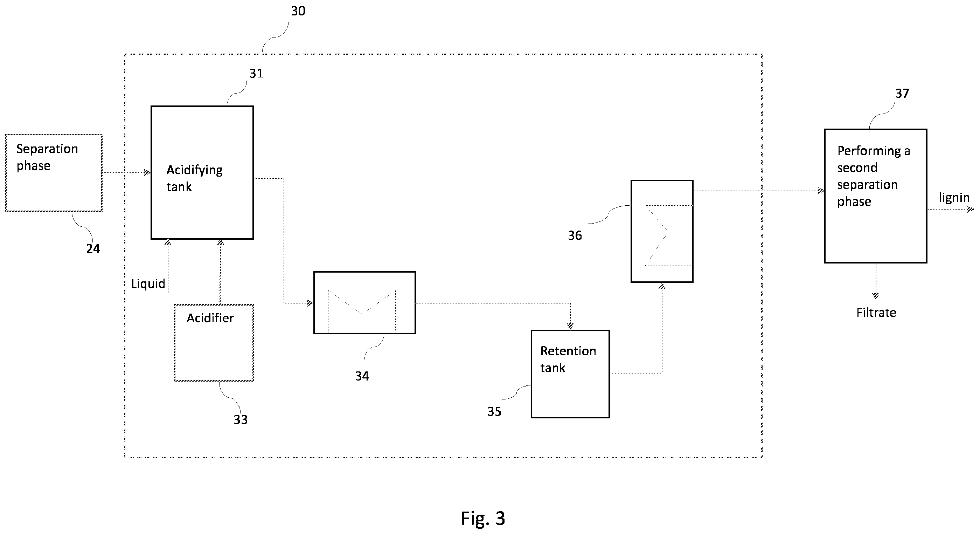

With reference to Fig. 3, an embodiment of the present invention will be discussed. Preferably, the acidifying phase is implemented in a system and method as described above with reference to Figs. 1 and 2.

The acidification phase 30 includes a suspension vessel or vessel 31 for receiving the precipitated lignin or lignin cake from the first separation phase or filter 24 and conduits, valves, or injectors 33 for adding acidifier, for example, H₂SO₄, to the lignin cake to thereby form an acidic slurry and establishing a low pH value, for example, in the range of 1 - 3. Downstream the suspension vessel 31, a heat exchanger 34 is arranged to establish a reaction temperature of the acidic slurry. Thus, after addition of the acidifier, the acidic slurry is fed to the heat exchanger 34 to obtain an elevated temperature of the acidic slurry, preferably, to a reaction temperature of the acidic slurry, for example, in the range of 65 - 95 degrees Celsius, or 70 - 85 degrees Celsius, or 75 - 88 degrees Celsius, or 78 - 85 degrees Celsius, or 83 - 87 degrees Celsius, or around 85 degrees Celsius.

The heated acidic slurry is then fed to a retention vessel 35, where the temperature is maintained at the reaction temperature during a reaction or retention time for, for example, 30 - 60 minutes, or 35 - 55 minutes, or 35 - 45 minutes, or around 40 minutes.

After the retention time, the acidic slurry is fed to a cooler 36, where the temperature is lowered to, for example, around 35 - 45 degrees Celsius. This is followed by a second separation phase 37 in a filter in which treated lignin content is separated from the acidic slurry.

Other acidifiers than H₂SO₄ may be used, but sulfuric acid is preferred as sulfur is a common chemical component in black liquor in kraft pulping. However, there may be a need for purging sulfur in order to keep the sodium/sulfur balance of the mill. Using HCI as an alternative acidifier is often not preferred as it will introduce chlorides into the chemical cycle of the mill.

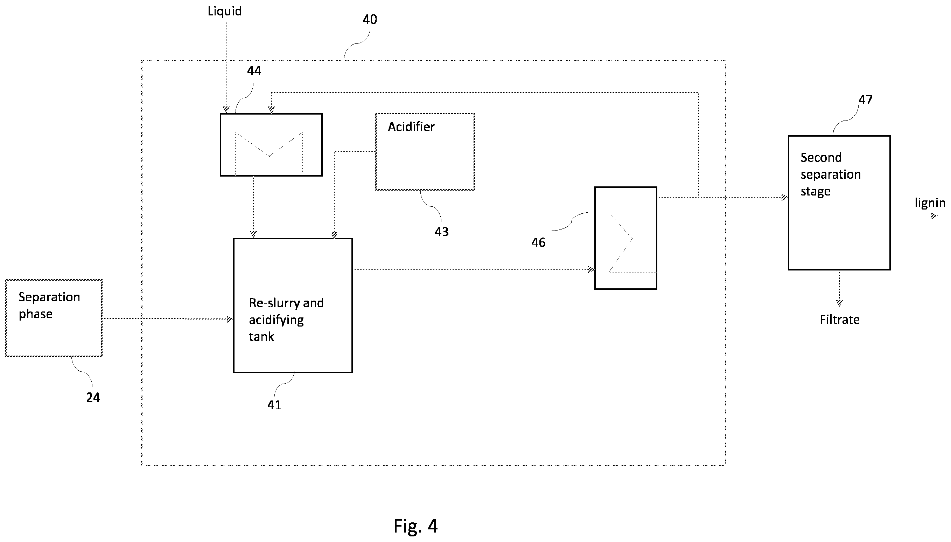

With reference to Fig. 4, an embodiment of the present invention will be discussed. Preferably, the acidifying phase is implemented in a system and method as described above with reference to Figs. 1 and 2.

The acidifying phase 40 includes a suspension vessel or vessel 41 for receiving the precipitated lignin, or lignin cake, from a first separation phase or filter 24 and conduits, valves or injectors 43 for adding acidifier, for example, H₂SO₄, to the lignin cake to thereby form an acidic slurry and establishing a low pH value, for example, in the range of 1 - 4 or 1 - 3. Heated liquid, for example water, condensate or filtrate is added from a heat exchanger 44 to establish a reaction temperature of the acidic slurry in the suspension vessel or vessel 41. Thus, after addition of the acidifier and heated liquid, the acidic slurry has an elevated temperature or reaction temperature, for example, in the range of 65 - 95 degrees Celsius, or 70 - 85 degrees Celsius, or 75 - 88 degrees Celsius, or 78 - 85 degrees Celsius, or 83 - 87 degrees Celsius, or around 85 degrees Celsius. The temperature is maintained at the reaction temperature during a reaction or retention time of, for example, 30 - 60 minutes, or 35 - 55 minutes, or 35 - 45 minutes, or around 40 minutes.

After the retention time, the acidic slurry is fed to a cooler 46, where the temperature is lowered to, for example, around 35 - 45 degrees Celsius. This is followed by a second separation phase 47 in a filter in which treated lignin content is separated from the acidic slurry.

Other acidifiers than H₂SO₄ may be used, but sulfuric acid is preferred as sulfur is a common chemical component in black liquor in kraft pulping. However, there may be a need for purging sulfur in order to keep the sodium/sulfur balance of the mill. Using HCI as an alternative acidifier is often not preferred as it will introduce chlorides into the chemical cycle of the mill.

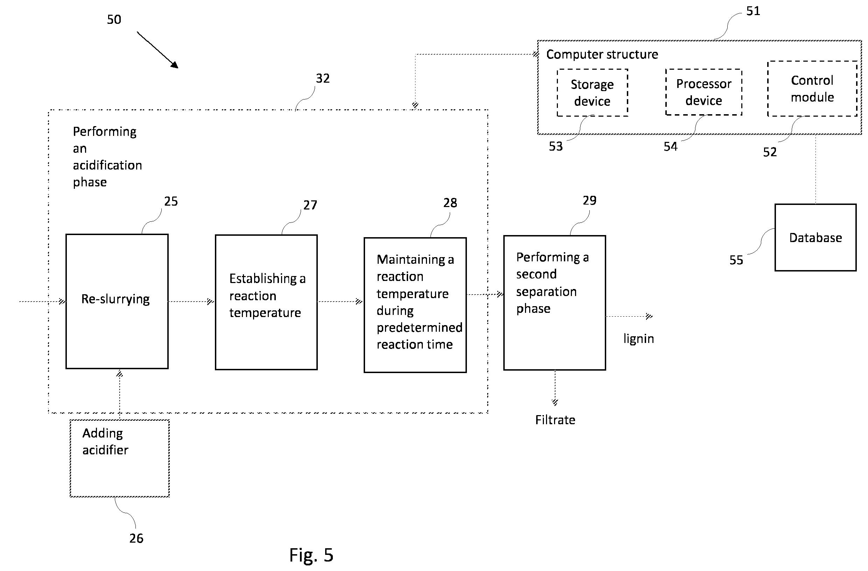

Turning now to Fig. 5, a computer structure or software 51 in which the method according to the present invention may be implemented will be described. The computer structure or software 51 may be included in a lignin separation system 50 as shown in Fig. 5. As shown in FIG. 5, a lignin separation system 50 may include a control console or control module 52, and a storage device or database 53. The control module 52 may include hardware and software components to control equipment of the lignin separation system 50, such as acidification processes described above with reference to Figs. 1 - 4. In order to execute control instructions and operations and acquire information data from the various devices, units and equipment of the system, sensors for pressure, temperature, etc. are arranged and in connection with the control module 52. The hardware components of computer structure 51 may include one or more computers (e.g., general purpose computers, workstations, servers, terminals, portable/mobile devices, etc.); processor devices (e.g., central processing units (CPUs), graphics processing units (GPUs), microprocessors, digital signal processors (DSPs), field programmable gate arrays (FPGAs), special-purpose or specially-designed processors, etc.); memory/storage devices (e.g., read-only memories (ROMs), random access memories (RAMs), flash memories, hard drives, optical disks, solid-state drives (SSDs), etc.); input devices (e.g., keyboards, mice, touch screens, mics, buttons, knobs, trackballs, levers, handles, joysticks, etc.); output devices (e.g., displays, printers, speakers, vibration devices, etc.); or other suitable hardware. The software components of computer structure 51 may include operation system software, application software, etc. and may include computer readable and executable codes or instructions for performing the processes described in detail in this application. For example, the control module 52, and a processor device 54 may be communicatively connected to a memory/storage device 53 to access and execute the codes or instructions. The execution of the codes or instructions may cause the processor device 54 to perform operations to achieve one or more functions consistent with the disclosed embodiments. The computer structure 51 may be configured to execute the methods described herein, for example, the methods described with reference to Figs. 1 - 4.

As indicated above, computer structure 51 may be communicatively connected to a database 55 to access data. In some embodiments, database 55 may be implemented using local hardware devices, such as one or more hard drives, optical disks, and/or servers that are in the proximity of computer structure 51. In some embodiments, database 55 may be implemented in a data center or a server located remotely with respect to computer structure 51. Computer structure 51 may access data stored in database 55 through wired or wireless communication. Further, database 55 may include machine data. Machine data may include information associated with devices, units, and equipment of lignin separation system 50, or other machines relevant to the separation system, and the like.

Various method steps, operations or functions are described herein, which may be implemented or defined as software code or instructions. Such content may be directly executable ("object" or "executable" form), source code, or difference code ("delta" or "patch" code). Software implementations of the embodiments described herein may be provided via an article of manufacture with the code or instructions stored thereon, or via a method of operating a communication interface to send data via the communication interface. A machine or computer readable storage medium may cause a machine to perform the functions or operations described and includes any mechanism that stores information in a form accessible by a machine (e.g., computing device, electronic system, and the like), such as recordable/non-recordable media (e.g., read only memory (ROM), random access memory (RAM), magnetic disk storage media, optical storage media, flash memory devices, and the like). A communication interface includes any mechanism that interfaces to any of a hardwired, wireless, optical, and the like, medium to communicate to another device, such as a memory bus interface, a processor bus interface, an Internet connection, a disk controller, and the like. The communication interface can be configured by providing configuration parameters and/or sending signals to prepare the communication interface to provide a data signal describing the software content. The communication interface can be accessed via one or more commands or signals sent to the communication interface.

The present disclosure also relates to a system for performing the operations herein. This system may be specially constructed for the required purposes, or it may comprise a general-purpose computer selectively activated or reconfigured by a computer program stored in the computer. Such a computer program may be stored in a computer readable storage medium, such as, but not limited to, any type of disk including floppy disks, optical disks, CDROMs, and magnetic-optical disks, read-only memories (ROMs), random access memories (RAMs), EPROMs, EEPROMs, magnetic or optical cards, or any type of media suitable for storing electronic instructions, each coupled to a computer system bus.

Embodiments of the present disclosure may be implemented with computer-executable instructions. The computer-executable instructions may be organized into one or more computer-executable components or modules. Aspects of the present disclosure may be implemented with any number and organization of such components or modules. Other embodiments of the present disclosure may include different computer-executable instructions or components having more or less functionality than illustrated and described herein.

When introducing elements of aspects of the present disclosure or the embodiments thereof, the articles "a," "an," "the," and "said" are intended to mean that there are one or more of the elements. The terms "comprising," "including," and "having" are intended to be inclusive and mean that there may be additional elements other than the listed elements.

### Examples

The present invention is based on the surprising finding that acid re-slurry and establishment of a temperature around 65 - 95 degrees Celsius or about 85 degrees Celsius, provides significantly improved washing and filtering efficiency in that the washing resistance and filtering resistance can be significantly reduced. Tests have revealed that performing the re-slurry step at a temperature of around 85 degrees Celsius resulted in a 2 to 2.5 times lower filtration resistance and in a 4 to 7.5 times lower washing resistance (in comparison with a reference case where a temperature of around 55 degrees Celsius). This corresponds to a significant increased filtration time and washing time. This also entails to a capacity increase of second separation phase (or filter) in a LignoBoost^{™} process (a filter that handles both filtration and washing of the lignin). For example, a 1.6 times faster filtration time and 2.8 times faster washing time, results in about 47% capacity increase. A filtration time 430 sec, and a washing time of 460 sec in a reference case gives a total cycle time of about 22 minutes. Using the present invention, the filtration time is 270 sec and the washing time is 180 sec, which gives a total cycle time of about 15 minutes.
scope of aspects of the present disclosure as defined in the appended claims. As various changes could be made in the above constructions, products, and methods without departing from the scope of aspects of the present disclosure, it is intended that all matter contained in the above description and shown in the accompanying drawings shall be interpreted as illustrative and not in a limiting sense.

## Claims

1. Method for separation of lignin from an aqueous slurry containing lignocellulosic biomass material comprising:
providing the aqueous slurry having an initial pH level to at least one precipitation phase (PP1, PP2) for precipitating lignin;
performing the at least one precipitation phase during reaction times including adding at least one acidifier, wherein a decrease in the pH value of the aqueous slurry from said initial pH level to respective lower pH levels are created;
separating the precipitated lignin in a first separation phase;
performing an acidification phase including:
- performing a re-slurry step including mixing lignin from the first separation phase with an acidifier to form an acidic slurry;
- establishing a reaction temperature in a range of 65 - 95 degrees Celsius in the acidic slurry; and
- performing a retention step including maintaining the acidic slurry at the reaction temperature for a reaction time period of 30 - 60 minutes; and
separating the treated lignin content from the acidic slurry in a second separation phase.

2. Method according to claim 1, wherein the acidification phase comprises lowering a pH value of the acidic slurry to a pH value to between 1 - 4.

3. Method according to claim 1, further comprising establishing a reaction temperature in a range of 70-88 degrees Celsius in the acidic slurry.

4. Method according to claim 1, further comprising heating the acidic slurry to the reaction temperature in a range of 65-95 degrees Celsius during the re-slurry step.

5. Method according to claim 1, further comprising:
performing the re-slurry step including mixing lignin from the first separation phase with an acidifier to form an acidic slurry, wherein the acidic slurry has a temperature in a range of 30 - 65 degrees Celsius; and
feeding the acidic slurry to a heating step where the temperature of the acidic slurry is increased to the reaction temperature having a range of 65 - 95 degrees Celsius.

6. Method according to any of claims 1 - 5, further comprising a cooling step before the second separation phase, wherein the temperature of the acidic slurry is reduced with between 25 - 50 degrees Celsius.

7. A computer-readable medium having stored therein computer-readable instructions for a processor, wherein the instructions when read and implemented by the processor, cause the processor to:
control at least one precipitation phase for precipitating lignin in an aqueous slurry containing lignocellulosic biomass material during reaction times including adding at least one acidifier, wherein a decrease in the pH value of the aqueous slurry from said initial pH level to respective lower pH levels are created;
control a separation of precipitated lignin in a first separation phase;
control an acidification phase including:
- performing a re-slurry step including mixing lignin from the first separation phase with an acidifier to form an acidic slurry;
- establishing a reaction temperature in a range of 65 - 95 degrees Celsius in the acidic slurry; and
- maintaining the acidic slurry at the reaction temperature for a reaction time period of 30 - 60 minutes; and
control a separation of treated lignin content from the acidic slurry in a second separation phase.

8. The computer-readable medium according to claim 7, said computer-readable medium having stored therein computer-readable instructions for the processor, wherein the instructions when read and implemented by the processor cause the processor to control the acidification phase to lower a pH value of the acidic slurry to a pH value to between 1 - 4.

## Patentansprüche

1. Verfahren zum Abtrennen von Lignin aus einer wässrigen Aufschlämmung, die lignocellulosisches Biomassematerial enthält, umfassend:
Bereitstellen der wässrigen Aufschlämmung mit einem anfänglichen pH-Wert zu mindestens einer Fällungsphase (PP1, PP2) zum Fällen von Lignin;
Durchführen der mindestens einen Fällungsphase während Reaktionszeiten einschließlich Zugeben mindestens eines Ansäuerungsmittels, wobei eine Abnahme des pH-Werts der wässrigen Aufschlämmung von dem anfänglichen pH-Wert-Niveau auf jeweilige niedrigere pH-Wert-Niveaus erzeugt wird;
Abtrennen des ausgefällten Lignins in einer ersten Abtrennphase;
Durchführen einer Ansäuerungsphase, einschließlich:
- Durchführen eines Wiederaufschlämmungsschritts, einschließlich des Mischens von Lignin aus der ersten Abtrennphase mit einem Säuerungsmittel, um eine saure Aufschlämmung auszubilden;
- Festlegen einer Reaktionstemperatur in einem Bereich von 65 - 95 Grad Celsius in der sauren Aufschlämmung; und
- Durchführen eines Retentionsschritts, einschließlich das Halten der sauren Aufschlämmung bei der Reaktionstemperatur für eine Reaktionszeitspanne von 30 - 60 Minuten; und
Abtrennen des behandelten Ligningehalts von der sauren Aufschlämmung in einer zweiten Abtrennphase.

2. Verfahren nach Anspruch 1, wobei die Ansäuerungsphase das Absenken eines pH-Werts der sauren Aufschlämmung auf einen pH-Wert auf zwischen 1 - 4 umfasst.

3. Verfahren nach Anspruch 1, ferner umfassend das Festlegen einer Reaktionstemperatur in einem Bereich von 70-88 Grad Celsius in der sauren Aufschlämmung.

4. Verfahren nach Anspruch 1, ferner umfassend das Erhitzen der sauren Aufschlämmung auf die Reaktionstemperatur in einem Bereich von 65-95 Grad Celsius während des Wiederaufschlämmungsschritts.

5. Verfahren nach Anspruch 1, ferner umfassend:
Durchführen des Wiederaufschlämmungsschritts, umfassend das Mischen von Lignin aus der ersten Trennphase mit einem Ansäuerungsmittel, um eine saure Aufschlämmung auszubilden, wobei die saure Aufschlämmung eine Temperatur in einem Bereich von 30 - 65 Grad Celsius aufweist; und
Zuführen der sauren Aufschlämmung zu einem Heizschritt, wobei die Temperatur der sauren Aufschlämmung auf die Reaktionstemperatur, die in einem Bereich von 65 - 95 Grad Celsius liegt, erhöht wird.

6. Verfahren nach einem der Ansprüche 1 bis 5, ferner umfassend einen Kühlschritt vor der zweiten Abtrennungsphase, wobei die Temperatur der sauren Aufschlämmung um zwischen 25 - 50 Grad Celsius reduziert wird.

7. Computerlesbares Medium, das darin gespeicherte computerlesbaren Anweisungen für einen Prozessor aufweist, wobei die Anweisungen, wenn sie durch den Prozessor gelesen und implementiert werden, den Prozessor veranlassen zum:
Steuern mindestens einer Ausfällungsphase zum Ausfällen von Lignin in einer wässrigen Aufschlämmung, die lignocellulosisches Biomassematerial enthält, während der Reaktionszeiten, einschließlich Zugeben von mindestens einem Ansäuerungsmittel, wobei eine Verringerung des pH-Werts der wässrigen Aufschlämmung von dem anfänglichen pH-Wert-Niveau auf jeweilige niedrigere pH-Wert-Niveaus erzeugt wird;
Steuern einer Abtrennung von ausgefälltem Lignin in einer ersten Abtrennphase;
Steuern einer Ansäuerungsphase, einschließlich:
- Durchführen eines Wiederaufschlämmungsschritts, einschließlich des Mischens von Lignin aus der ersten Abtrennphase mit einem Säuerungsmittel, um eine saure Aufschlämmung auszubilden;
- Festlegen einer Reaktionstemperatur in einem Bereich von 65 - 95 Grad Celsius in der sauren Aufschlämmung; und
- Halten der sauren Aufschlämmung bei der Reaktionstemperatur für eine Reaktionszeitspanne von 30 - 60 Minuten; und
Steuern einer Abtrennung von behandeltem Ligningehalt aus der sauren Aufschlämmung in einer zweiten Abtrennphase.

8. Computerlesbares Medium nach Anspruch 7, wobei das computerlesbare Medium darin gespeicherte computerlesbare Anweisungen für den Prozessor aufweist, wobei die Anweisungen, wenn sie durch den Prozessor gelesen und implementiert werden, den Prozessor veranlassen, die Ansäuerungsphase zu steuern, um einen pH-Wert der sauren Aufschlämmung auf einen pH-Wert zwischen 1 - 4 zu senken.

## Revendications

1. Procédé destiné à la séparation de lignine par rapport à une bouillie aqueuse contenant un matériau de biomasse lignocellulosique comprenant :
la fourniture de la bouillie aqueuse ayant un niveau de pH initial à au moins une phase de précipitation (PP1, PP2) permettant de précipiter la lignine ;
la mise en œuvre de l'au moins une phase de précipitation pendant des temps de réaction comportant l'addition d'au moins un acidifiant, dans lequel une diminution de la valeur de pH de la bouillie aqueuse dudit niveau de pH initial à des niveaux de pH plus bas respectifs est créée ;
la séparation de la lignine précipitée dans une première phase de séparation ;
la mise en œuvre d'une phase d'acidification comportant :
- la mise en œuvre d'une étape de remise en bouillie comportant le mélange de la lignine provenant de la première phase de séparation avec un acidifiant pour former une bouillie acide ;
- l'établissement d'une température de réaction dans une plage de 65 à 95 degrés Celsius dans la bouillie acide ; et
- la mise en œuvre d'une étape de rétention comportant le maintien de la bouillie acide à la température de réaction pendant un laps de temps de réaction de 30 à 60 minutes ; et
la séparation de la teneur en lignine traitée par rapport à la bouillie acide dans une seconde phase de séparation.

2. Procédé selon la revendication 1, dans lequel la phase d'acidification comprend l'abaissement d'une valeur de pH de la bouillie acide à une valeur de pH comprise de 1 à 4.

3. Procédé selon la revendication 1, comprenant en outre l'établissement d'une température de réaction dans une plage de 70 à 88 degrés Celsius dans la bouillie acide.

4. Procédé selon la revendication 1, comprenant en outre le chauffage de la bouillie acide à la température de réaction dans une plage de 65 à 95 degrés Celsius pendant l'étape de remise en bouillie.

5. Procédé selon la revendication 1, comprenant en outre :
la mise en œuvre de l'étape de remise en bouillie comportant le mélange de la lignine provenant de la première phase de séparation avec un acidifiant pour former une bouillie acide, dans lequel la bouillie acide a une température dans une plage de 30 à 65 degrés Celsius ; et
l'alimentation de la bouillie acide à une étape de chauffage où la température de la bouillie acide est augmentée à la température de réaction ayant une plage de 65 à 95 degrés Celsius.

6. Procédé selon l'une quelconque des revendications 1 à 5, comprenant en outre une étape de refroidissement avant la seconde phase de séparation, dans lequel la température de la bouillie acide est réduite entre 25 et 50 degrés Celsius.

7. Support lisible par ordinateur dans lequel sont stockées des instructions lisibles par ordinateur pour un processeur, dans lequel les instructions lorsqu'elles sont lues et implémentées par le processeur, amènent le processeur à :
commander au moins une phase de précipitation permettant de précipiter la lignine dans une bouillie aqueuse contenant un matériau de biomasse lignocellulosique pendant des temps de réaction comportant l'addition d'au moins un acidifiant, dans lequel une diminution de la valeur de pH de la bouillie aqueuse dudit niveau de pH initial à des niveaux de pH plus bas respectifs est créée ;
commander une séparation de lignine précipitée dans une première phase de séparation ;
commander une phase d'acidification comportant :
- la mise en œuvre d'une étape de remise en bouillie comportant le mélange de la lignine provenant de la première phase de séparation avec un acidifiant pour former une bouillie acide ;
- l'établissement d'une température de réaction dans une plage de 65 à 95 degrés Celsius dans la bouillie acide ; et
- le maintien de la bouillie acide à la température de réaction pendant un laps de temps de réaction de 30 à 60 minutes ; et
commander une séparation de la teneur en lignine traitée par rapport à la bouillie acide dans une seconde phase de séparation.

8. Support lisible par ordinateur selon la revendication 7, ledit support lisible par ordinateur ayant, stockées dans celui-ci, des instructions lisibles par ordinateur pour le processeur, dans lequel les instructions lorsqu'elles sont lues et implémentées par le processeur amènent le processeur à commander la phase d'acidification pour abaisser une valeur de pH de la bouillie acide à une valeur de pH comprise de 1 à 4.
